# EUROPEAN PATENT SPECIFICATION

(11) **EP 1 646 235 B1**
(45) Date of publication and mention of the grant of the patent: **05.10.2011**
(21) Application number: 05256208.9
(22) Date of filing: 05.10.2005
(51) Int. Cl.: H04N 7/26

(54) **Moving picture recording and reproducing apparatus and method**
Bewegtbildaufnahme- und Wiedergabevorrichtung und -Verfahren
Appareil et méthode d'enregistrement et de reproduction d'images animées

(30) Priority: 06.10.2004 JP 2004293373
(43) Date of publication of application: 12.04.2006
(73) Proprietor: OMRON CORPORATION, Kyoto-shi, Kyoto 600-8530 (JP)
(72) Inventor: Takikawa, Erina, c/o Omron Corporation, Kyoto-shi Kyoto 600-8530 (JP); Sakuragi, Miharu, c/o Omron Corporation, Kyoto-shi Kyoto 600-8530 (JP); Matsuoka,Miki, c/o Omron Corporation, Kyoto-shi Kyoto 600-8530 (JP); Yoshida, Yoko, c/o Omron Corporation, Kyoto-shi Kyoto 600-8530 (JP)
(74) Representative: Calderbank, Thomas Roger

(56) References cited:
- US-A- 4 951 140
- US-A- 5 666 154
- US-A1- 2003 053 704
- US-A1- 2003 174 773
- US-B1- 6 173 069
- US-B1- 6 411 339

## Description

The present invention relates to a technique of recording and reproducing moving pictures.

A moving picture recording apparatus performing recording of moving pictures such as a handheld video camera and an installation type monitoring camera, has been utilized for various applications. A video picture photographed by a moving picture recording apparatus is recorded on a recording medium such as a video tape, DVD, hard disk (HD) and memory, and is reproduced by a moving picture reproducing apparatus. Also, there is a moving picture recording apparatus of a type having a moving picture reproducing function. In this type of apparatus, a single apparatus can perform recording and reproduction of a moving picture and outputting a video signal to an external display apparatus.

Most photographing subjects of the moving picture recording apparatus are people, and in many cases, the subjects are human face portions. Consequently, various techniques for improving image quality of a person and a face portion have been conventionally considered.

For example, conventionally, there has been proposed a technique in which an area of a face or a person is detected from an image and the area is subjected to a partial high image quality encoding or partial magnification encoding to thereby display a face of a visitor or a prowler clearly on a small screen of a mobile terminal. Furthermore, conventionally, there has been proposed a technique using a so-called ROI (Region of Interest) method, a compression ratio of the area of a person in an image is kept low to thereby keep the image quality of the portion high, while a compression ratio of the other background portion is set high, so that a compression ratio is increased as a whole to thereby reduce the whole capacity of the image after compression processing. Furthermore, conventionally, there has been proposed a technique in which data compression processing is executed for a face area of an image and a background area is replaced by representative compressed data to reduce the capacity of the whole image.

Thus, the prior art attempts simultaneous solution of the contradictory problems of image quality improvement and capacity reduction, in which the quality of face and person portions is maintained, while the quality of the other portions is sacrificed.

US 5 666 154 and US 2003/0174773 show methods for video object detection and tracking with different encoding or compression rates for objects and background.

US 6 411 339 shows a camcorder with a resynthesizing portion for video objects.

A larger capacity recording medium and a higher communication rate have been solving the recording capacity problem associated with recording moving picture. Accordingly, from now on, demands on image quality such as a demand that the whole appearance of the moving picture including the background is fine while person and face portions are finer than ever is expected to increase. For example, there is a presumed need that, in a situations where a user photographs an athletic meeting of his or her child, the user photographs how his or her child competes with other children, the user photographs scenes of the athletic meeting and the like, and at the same time, clearly records in close-up his or her child's running and facial expressions.

However, in a conventional moving picture recording apparatus, when zooming out for photographing the whole image, a person or a face portion becomes relatively small, so that facial expressions and the like cannot be recorded clearly. On the contrary, when zooming in for photographing a close-up image, the surrounding landscape is cut from an angle of field, so that the whole appearance cannot be obtained. Thus, when photographing his or her child's running race, the user tries to photograph the whole appearance of the running race, resulting in failure in photographing lively expressions of the child, or the user pursues only closeup of the child, resulting inmissing a scene in which the child overtakes another child. Therefore, in many cases, the user cannot perform the photographing he or she desires. In particular, when photographing a moving subject, it is difficult to follow the motion of the subject while switching zoom settings or getting a close-up of the face.

The present invention is made in light of the above-described actual situations, and its object is to provide a technique by which whole and close-up high-quality moving pictures can be easily photographed, recorded and reproduced.

In order to achieve the above-described object, in the present invention is as defined in claims 1 and 14. The dependent claims relate to preferred embodiments.

A moving picture recording apparatus of an embodiment comprises imaging means, whole image generating means, partial image generating means and recording means. The imaging means picks up an image at a higher resolution than a resolution of pixels for moving picture recording. Here, the image obtained by picking up the image is referred to as "original image." The whole image generating means converts the resolution of the original image into an image of the pixels for moving picture recording. The image generated by the whole image generating means is referred to as "whole image." On the other hand, the partial image generating means generates an image of the pixels for moving picture recording from a part of the original image. The image generated by the partial image generating means is referred to as "partial image." The recording means records a whole moving picture composed of the whole images and a partial moving picture composed of the partial images in association with each other.

According to this embodiment, only the whole appearance in an angle of field is photographed, yet two types of moving pictures of whole and partial (close-up) moving pictures are automatically recorded, thus, a zooming operation or the like by a photographer is unnecessary, which simplifies photographing and recording. In addition, since either image can be generated from the high-resolution original image, favorable image quality can be obtained.

From which area of the original image the partial image is generated may be fixedly set or may be changed dynamically.

For example, in the case where an area that the user wants to photograph in close-up can be specified in advance, such as a moving picture apparatus for monitoring an entrance of a building and a site (monitoring camera), the area in the original image for generating the partial image may be fixedly set. Furthermore, in the case where there are a plurality of areas that the user wants to photograph in close-up, the areas may be switched at constant time intervals.

Furthermore, by utilizing an image processing technique and an image recognizing technique to detect a subject (person, face or object) to be photographed in close-up from the original image, the area of the partial image can be automatically switched.

Particularly, the partial image generating means may have face detecting means for detecting a human face from the original image and generating the partial image so as to contain the detected face. According to this embodiment, only a person to be a subject in an angle of field is photographed, yet the partial moving picture pursuing the faces of the person in closeup is automatically recorded.

Here, it is preferable that the partial image generating means has face information registering means in which face information is registered and face recognizing means for determining whether or not the detected face coincides with a face registered in the face information registering means, and that in the case of the registered face, the partial image containing the face is generated. According to this embodiment , since the partial moving picture of a non-registrant is not generated, there is an advantage that only the partial moving picture of a desired person (registrant) is recorded even if a number of people are contained in the angle of field.

It is preferable that the partial image generating means extracts an area with a size of the pixels for moving picture recording from the original image and makes it the partial image. In this case, since resolution conversion is unnecessary, simplification and speeding-up of the partial image generation processing can be achieved, and deterioration in image quality due to the resolution conversion can be prevented.

Alternatively, the partial image generating means may extract an area with a size substantially proportional to a size of the face and then convert the resolution of the extracted image into the partial image of the pixels for moving picture recording. In this case, the size of the face occupying the partial image becomes substantially constant. Namely, there is an advantage that the face can be photographed at a constantly similar size.

It is preferable that the partial image generating means extracts the above-described area from the original image so as to keep a position of the face in the partial image substantially constant. Thereby, a partial moving picture with little shaking can be obtained, which is easy to view

It is preferable that the recording means records the whole moving picture and the partial moving picture while making them temporally correspond to each other. This makes it easy to display the whole moving picture and the partial moving picture in sync when reproducing the recorded moving pictures.

Furthermore, it is preferable that the recording means records a position of the partial image in the whole image. This allows various display effect of associating the whole image and the partial moving picture with each other to be easily realized when reproducing the recorded moving picture.

It is preferable that the recording means has a recording medium removable from a body of the moving picture recording apparatus. This makes it easy to pass the recordedmovingpicture to other equipment.

It is also preferable that the moving picture recording apparatus comprises image synthesizing means for generating a video signal for displaying the whole moving picture and the partial moving picture while making them correspond to each other. Furthermore, the moving picture recording apparatus may comprise display means for displaying the video signal. Here, the image synthesizing means and the display means each may have a configuration integrated with the body of the moving picture recording apparatus or they may each have a separate configuration.

A moving picture reproducing apparatus of an embodiment comprises reading means for reading a whole moving picture and a partial moving picture recorded by the above-described moving picture recording apparatus from the moving picture recording apparatus, image synthesizing means for generating a video signal for displaying the whole moving picture and the partial moving picture while making them correspond to each other, and display means for displaying the video signal.

When the moving picture recording apparatus or the moving picture reproducing apparatus reproduces and displays the moving pictures, for example, the image synthesizing means may synthesize a mark indicating the area of the partial moving picture in the whole moving picture. This allows a user (viewer) to easily grasp what area is being displayed in closeup.

Furthermore, it is preferable that, when there are a plurality of partial moving pictures associated with the whole moving picture, the user is allowed by the operation means to select the partial moving picture to be displayed on a screen. This allows the portion desired by the user to be displayed in closeup. For the modes of a selection screen, there can be various modes such as e.g., a mode in which the partial moving pictures are displayed side by side, a mode in which a plurality of marks indicating the respective areas of the partial moving pictures are synthesized and displayed on the whole moving picture, and a mode in which an arbitrary position in the whole moving picture is selected and a partial image that is the closest to the selected position is displayed.

One proposed embodiment includes a moving picture recording apparatus or a moving picture reproducing apparatus having at least a part of the above-described embodiments. Also, it is proposed to provide a moving picture recording method or a moving picture recording and reproducing method including at least a part of the above-described processing, or a program for realizing the method. Each of the above-described configurations and processing can be combined with each other wherever possible.

According to the embodiments a whole moving picture and a close-up moving picture can be easily photographed, recorded and reproduced.

### IN THE DRAWINGS:

Fig. 1 is a block diagram showing a functional configuration of a moving picture recording apparatus.
Fig. 2 illustrates diagrams showing equipment configuration examples of the moving picture recording apparatus.
Fig. 3 is a flowchart showing moving picture recording processing.
Fig. 4 is a flowchart showing creation processing of a partial image list.
Fig. 5 is a flowchart showing generation/recording processing of a partial image.
Fig. 6 is a flowchart showing generation/recording processing of a whole image.
Fig. 7 illustrates a view showing face rectangles detected from an original image.
Fig. 8 illustrates a chart showing one example of the partial image list.
Fig. 9 illustrates a view for describing generation processing of a whole image and a partial image.
Fig. 10 is a diagram showing stream structures of the whole moving picture and the partial moving pictures.
Fig. 11 illustrates a view showing a display example of the whole moving picture and the partial moving picture.
Fig. 12 illustrates a view showing a display example of the whole moving picture and the partial moving picture.
Fig. 13 is a flowchart showing creation processing of a partial image list in accordance with a second exemplary embodiment.
Fig. 14 illustrates a diagram for describing partial moving picture generated in the second embodiment.
Fig. 15 is a flowchart showing generation/recording processing of a partial image in accordance with a third exemplary embodiment.

Hereinafter, referring to the drawings, preferred embodiments of this invention are described in detail.

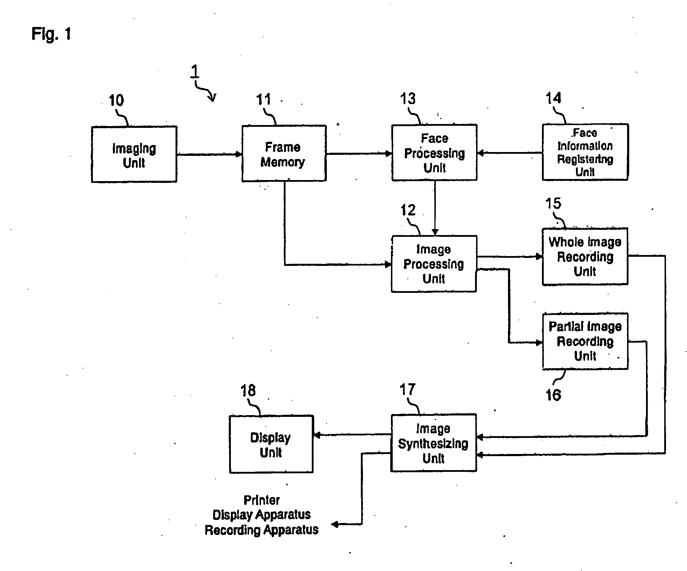

Fig. 1 shows a functional configuration of amoving picture recording apparatus according to an embodiment of the present invention. Amoving picture recording apparatus 1 is a so-called digital video camera system, which records a photographed video picture as a digital form of moving a picture or still picture.

As shown in Fig. 1, a moving picture recording apparatus 1 of the present embodiment comprises, as an image processing system, an imaging unit 10, a frame memory 11, an image processing unit 12, a f ace processing unit 13, a face information registering unit 14, a whole image recording unit 15, a partial image recording unit 16, an image synthesizing unit 17 and a display unit 18. Furthermore, although not illustrated, the apparatus 1 also comprises a voice processing system such as a microphone and a voice processing unit.

The imaging unit 10 (or imaging means) comprising an optical system and an imaging element. The imaging element is an image sensor such as CCD or CMOS imager, fox which an element having at least several million effective pixels (for example, 3,000,000 pixels) is used. An image picked up by the imaging unit 10 (referred to as an "original image") is temporarily memorized in the frame memory 11.

The image processing unit 12 has a function of reading the original image from the frame memory 11 and applying various types of image processing to the original image. Image processing includes, for example, resolution conversion, trimming, hand shake correction, sharpness, color tone correction and the like.

Photographing modes of the moving picture recording apparatus 1, include a moving picture photographing mode and a still picture photographing mode furthermore, the still picture photographing mode, includes a high-definition mode and a normal mode. In the high-definition mode, a still picture is recorded at approximately 2000×1500 pixels which is almost the same as the original image, and in the normal mode, at approximately 1600x1200 pixels. Furthermore, in the moving picture photographing mode, a moving picture is recorded at pixels for moving picture recording of 640x480 pixels (VGA size). In this manner, since the recording pixels are different depending on the photographing modes, the image processing unit 12 applies resolution conversion and trimming to the original image according to the photographing modes as necessary to generate an image for recording.

In the present embodiment, in the moving picture photographing mode, two types of images each having the VGA size (pixels for moving picture recording) of a whole image and a partial image are generated from the original image of approximately 2000×1500 pixels. Whole image generating means comprises the image processing unit 12. Furthermore, partial image generating means comprises the image processing unit 12, the face processing unit 13 and the face information registering unit 14.

In accordance with the invention, the whole image indicates an image containing almost the whole image appearing in the original image. This whole image is generated by converting (down-converting) the resolution of the whole effective area of the original image into the VGA size. The effective area indicates a portion excluding a margin for hand shake correction and excessive pixels for aspect ratio adjustment or the like from the original image and substantially corresponds to the whole area of the original image.

Meanwhile, the partial image indicates an image containing only a part of the image appearing in the original image. This partial image is generated by trimming (extracting) an area of the VGA size from the effective area of the original image. In the present embodiment, the trimming range is determined so as to contain a face portion detected by the face processing unit 13.

Although the whole image and the partial image are generated from the same original image, the whole image is generated from the almost whole area of the original image while the partial image is generated from a smaller area than the whole image. Accordingly, the partial image is such an image that a part of the whole image (e.g., face portion) is in close-up.

The face processing unit 13 has a function of executing face detection processing to detect a human face from the original image (face detecting means) and a function of executing face recognition processing to recognize the detected face (face recognizing means). In the face detection processing, the face processing unit 13 detects an area having facial features from the original image, and calculates coordinate values of a rectangle surrounding the face (referred to as) a "face rectangle". Furthermore, in the face recognition processing, the face processing unit 13 extracts feature amounts (referred to as face information) of face features such as eyebrows, eyes, nose, mouth and outline from a small image surrounded by the face rectangle, and compares it with face information registered in the face information registering unit 14 in advance to determine whether or not the detected face and the registered face coincide with each other.

Recording means for recording moving pictures comprises the whole image recording unit 15 and the partial image recording unit 16. When sequentially receivingwhole images from the image processing unit 12, the whole image recording unit 15 performs moving picture encoding processing to generate a whole moving picture. Furthermore, when sequentially receiving partial images from the image processing unit 12, the partial image recording unit 16 performs moving picture encoding processing to generate a partial moving picture. Then, the whole image recording unit 15 and the partial image recording unit 16 record the whole moving picture and the partial moving picture generated from the same original image on a recording medium in association with each other.

The recording medium is removable from a body of the moving picture recording apparatus 1. As the removable recording medium, for example, a semiconductor memory, CD, DVD, hard disk and the like are assumed.

The image synthesizing unit 17 has a function of reading the whole moving picture and the partial moving picture from the recording medium and performing decoding processing to generate a video signal. This video signal is displayed on the display unit 18 composed of a liquid crystal display, or is output to external equipment such as a printer, display apparatus and recording apparatus (DVD recorder, HD recorder or the like) via an external output I/F.

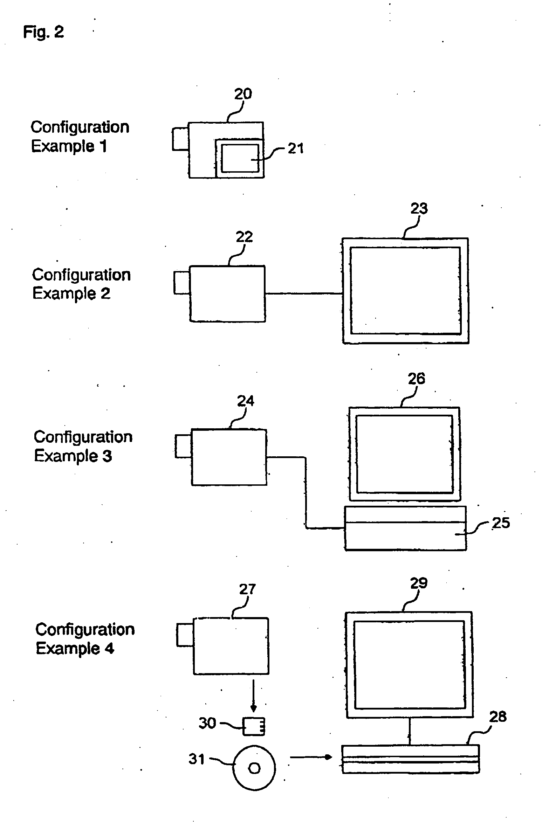

Fig. 2 shows equipment configuration examples of the moving picture recording apparatus of the invention.

In configuration example 1, a moving picture recording apparatus comprises a single digital video camera 20 with amoving picture reproducing function that comprises a display unit 21.

In a configuration example 2, a moving picture recording apparatus comprises a digital video camera 22 and a television receiver 23. In this configuration, the television receiver 23 takes on the function of the display unit 18 among components of the moving picture recording apparatus, the other functions are provided in the digital video camera 22. A whole moving picture and a partial moving picture photographed and recorded by the digital video camera 22 are output as a video signal by the digital video camera 22 and displayed on the television receiver 23.

In a configuration example 3, a moving picture recording apparatus comprises a video camera 24, information processing apparatus (e.g., a personal computer or the like) 25 and a display 26. In this configuration, the video camera 24 takes on the function of the imaging unit 10, and the display 26 takes on the function of the display unit 18, and the information processing apparatus 25 takes on the functions of the other components. The information processing apparatus 25 takes in a video picture from the video camera 24 and generates and records a whole moving picture and a part ial moving picture. The recorded moving pictures are reproduced by the information processing apparatus 25 and displayed on the display 26.

In configuration example 4, a moving picture recording apparatus comprises a digital video camera 27, player 28 and a television receiver 29. In this configuration, the player 28 takes on the function of the image synthesizing unit 17, the television receiver 29 takes on the function of the display unit 18, and the digital video camera 27 takes on the functions of the other components. A whole moving picture and a partial moving picture generated by the digital video camera 27 are recorded on a recording medium such as a semiconductor memory 30 and a DVD 31. The player (moving picture reproducing apparatus) 28 reads the moving pictures from the recording medium to generate a video signal. The video signal is displayed on a television receiver 29. Recording the moving pictures on the removable recording medium makes it easy to pass the moving pictures to other equipment.

As described above, the moving picture recording apparatus may have the integrated configuration (configuration example 1), or may have a separate configuration comprising a plurality pieces of equipment (configuration examples 2 to 4). Furthermore, the configuration may be modified or combined as necessary and is not limited to the illustrated examples.

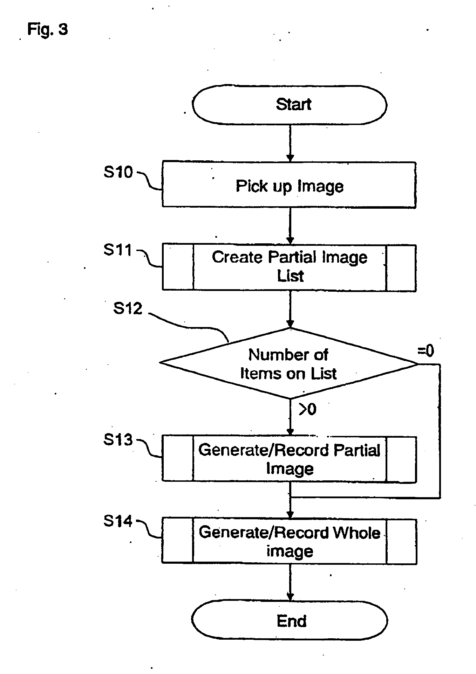

Next, moving picture recording processing of the moving picture recording apparatus is described in detail. Figs. 3 to 6 are flowcharts showing the moving picture recording processing in the first embodiment of the present invention. The processing described below is realized by a controller (e.g., CPU) of the moving picture recording apparatus executing control of hardware and arithmetic processing according to a program.

When moving picture recording starts, the processing in Fig. 3 is executed. The flowchart of Fig. 3 shows processing for photographing and recording one frame (image). During moving picture recording, this processing is repeatedly executed at a timing in sync with a frame rate (e.g. 30 times/second).

The imaging unit 10 first picks up an image (step S10). In the imaging unit 10, the image is picked up at a higher resolution (e.g., 3,000,000 pixels) than the pixels for moving picture recording (VGA size). An original image obtained by picking up the image is stored in the frame memory 11.

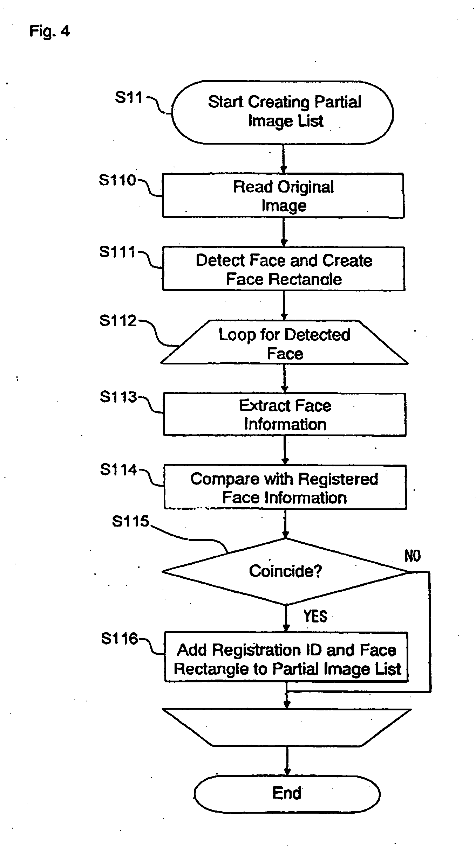

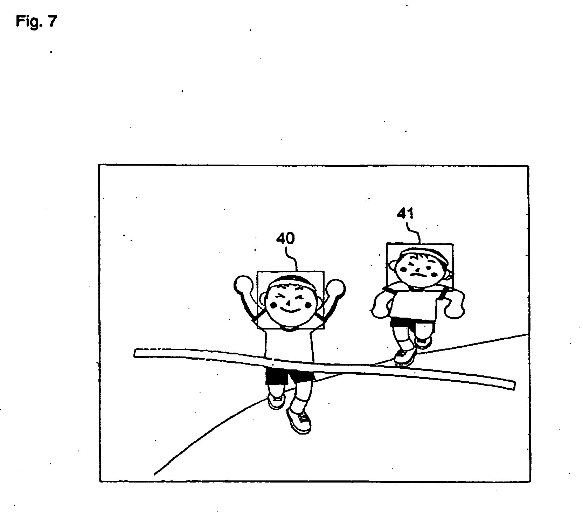

Next, the face processing unit 13 creates a partial image list from the original image (step S11). More particularly, as shown in Fig. 4, the face processing unit 13 reads the original image from the frame memory 11 (step S110), detects a face from the original image, and calculates a face rectangle (step S111). For example, in the case of the original image as shown in Fig. 7, two face rectangles 40, 41 are obtained.

After the face rectangle is obtained, the face processing unit 13 extracts face information from a face image surrounding by the face rectangle 40 (step S113). The face processing unit 13 checks whether or not the detected face coincides with a registered face, referring to the face information registered in the face information registering unit 14 (step S114). When the detected face coincides with the registered face (step S115; YES), the face processing unit 13 adds a registration ID of the face and the face rectangle to the partial image list (step S116). When there is no coincident face (step S115; NO), the addition to the partial image list is not performed. When the processing for the face rectangle 40 is finished, similar processing is executed for the other face rectangle 41 (step S112).

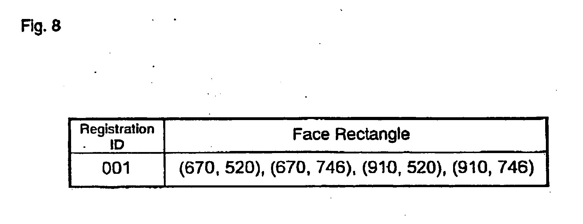

One example of the partial image list is shown in Fig. 8. The partial image list is information in which the registration ID of the face and coordinate values at four points of the face rectangle correspond to each other. Every time a face of a registrant is detected, an item (row) of the partial image list is added. In this example, only the information of the face rectangle 40 is added and the number of items on the partial image list is one.

The partial image list created in the face processing unit 13 is passed to the image processing unit 12. The image processing unit 12 checks whether the number of items on the partial image list is 0 or more than 0 (step S12). When the number of items is 0, namely when no face is detected, only a whole image is generated and recorded (step S14). Meanwhile, when the number of items is more than 0, namely when at least one face of the registrant is detected, not only the whole image but a partial image of the detected face (closeup image) is generated and recorded (steps S13, S14).

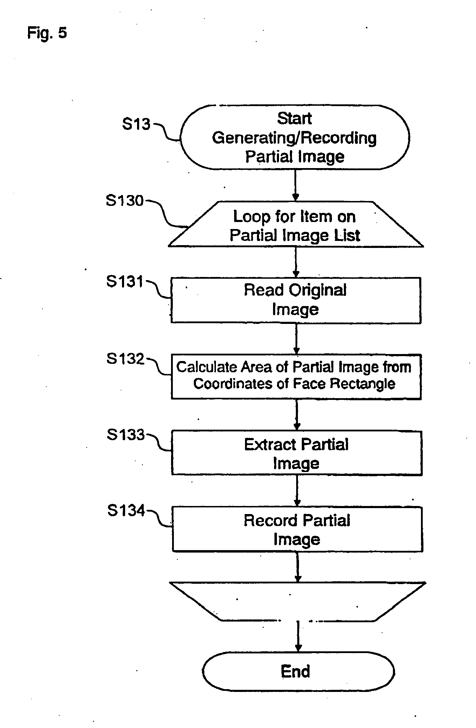

Fig. 5 shows generation/recording processing of a partial image(step S13)in more detail. The image processing unit 12 executes the following processing for each item of the partial image list (step S130).

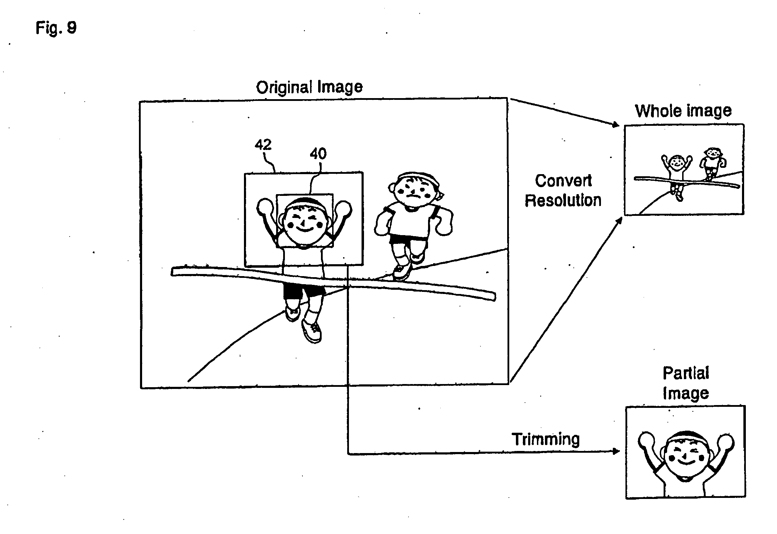

The image processing unit 12 first reads an original image from the frame memory 11 (step S131). Next, the image processing unit 12 acquires coordinates of a face rectangle from the partial image list to calculate coordinates of an area to be extracted as a partial image (step S132). Here, the coordinates are determined so that the center of the face rectangle coincides with the center of the area of the partial image. This is to keep a position of the face in the partial image constant. For example, in an example of Fig. 9, the partial image is an area 42 of 640x480 pixels around the center of the face rectangle 40.

The image processing unit 12 extracts the above-described area from the original image to generate the partial image of the VGA size as shown in Fig. 9 (step S133). The genexatedpartial image is passed to the partial image recording unit 16 together with the coordinates calculated at step S132 and the registration ID.

The partial image recording unit 16 first checks whether or not a partial moving picture whose registration ID coincides (limiting to a recorded one) exists. If it exists, the partial image recording unit 16 encodes the received partial image to add to the partial moving picture being recorded. If it does not exist, the partial image recording unit 16 newly generates a partial moving picture with respect to the registration ID. Thus, in the present embodiment, the generation and recording of the partial moving picture are performed for each registrant (for each face) (step S134).

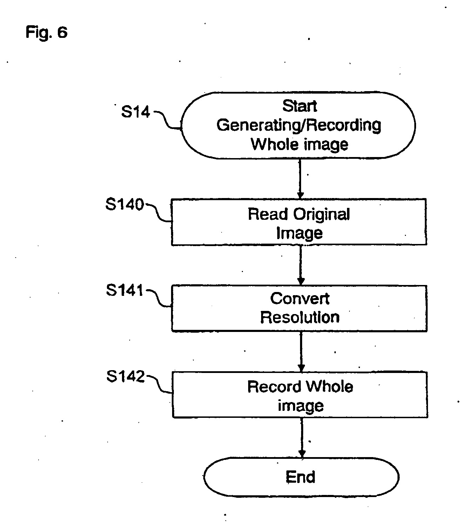

Fig. 6 shows generation/recording processing of a whole image (step S14) in more detail. The image processing unit 12 first reads an original image from the frame memory 11 (step S140). Next, the image processing unit 12 converts the resolution of the original image into an image of the VGA size to generate a whole image as shown in Fig. 9 (step S141). Then, the whole image recording unit 15 encodes the whole image to generate and record the whole image (step S142).

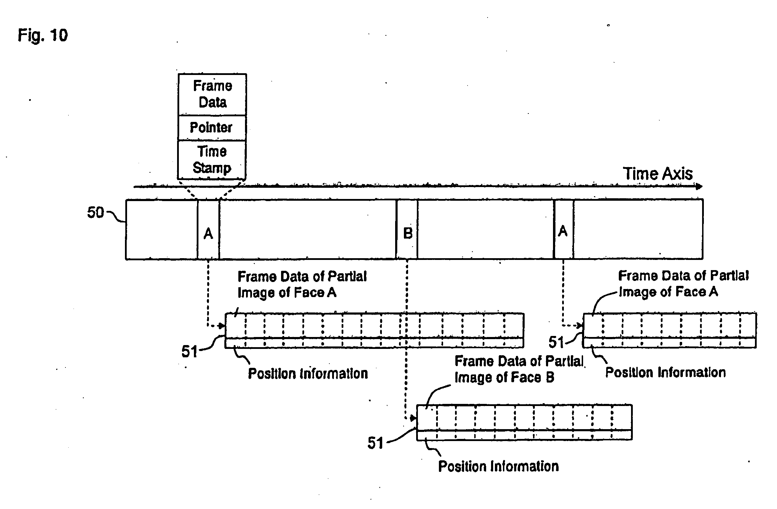

Fig. 10 shows one example of stream structures (data structures) of the whole moving picture and the partial moving pictures. Here, a whole moving picture stream 50 and three partial moving picture streams 51 are recorded in association with each other.

Each frame of the whole moving picture stream 50 is composed by frame data (whole image), a pointer and a time stamp. When a partial image corresponding to the relevant frame exists, information for specifying the partial moving picture stream 51 (for example, a file name or a track on which it is recorded) is stored in the pointer and information for specifying the frame of the partial image (for example, a time, a frame number or the like) is stored in the time stamp. When one frame corresponds to a plurality of partial images, the pointer to each partial image and the time stamp thereof are stored. This allows the whole moving picture and the partial moving picture to be associated with and temporally correspond to each other.

Furthermore, each frame of the partial moving picture streams 51 is composed by frame data (partial image) and position information. The position information stores coordinate values indicating a position (area) of the partial image in the whole image. This allows the whole moving picture and the partial moving picture to positionally correspond to each other.

Next, processing for displaying the whole moving picture and the partial moving picture while make them correspond to each other is described.

The image synthesizing unit 17 reads from a recording medium the whole moving picture and the partial moving picture to be displayed and applies decoding processing, and then applies resolution conversion to the whole moving picture and the partial moving picture as necessary in accordance with their display sizes, respectively. The image synthesizing unit 17 synthesizes the whole moving picture and the partial moving picture to generate a video signal and output the video signal to the display unit 18. This allows the whole moving picture and the partial moving picture to be displayed in sync.

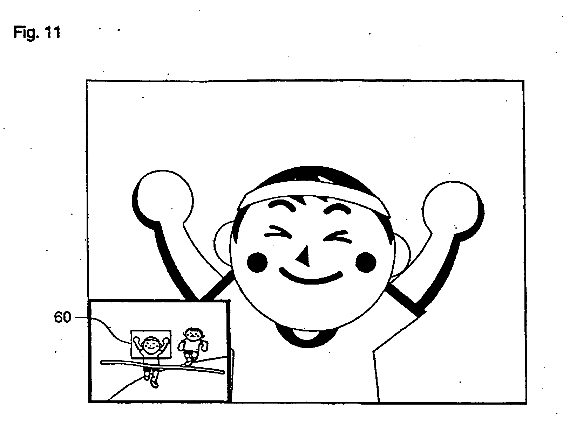

Fig. 11 shows a display example in which the partial moving picture is displayed on the whole screen and the whole moving picture is scaled down and displayed in the lower left of the screen. This display mode is preferable when the user mainly wants to view facial expressions.

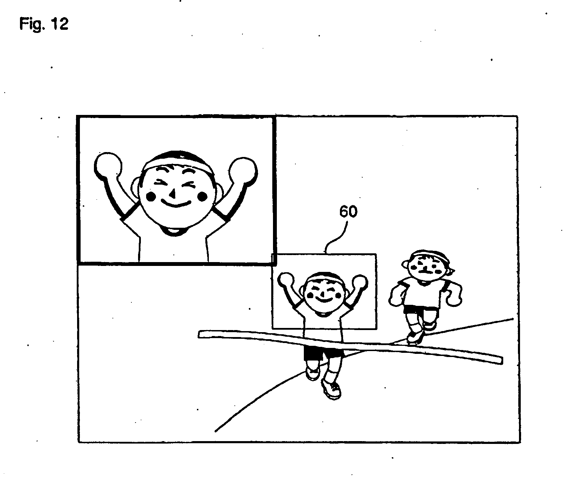

Fig. 12 shows a display example in which the whole moving picture is displayed on the whole screen and the partial moving picture is scaled down and displayed in the upper left of the screen. This display mode is preferable when the user mainly wants to view the whole appearance or the like.

Other display modes include, for example, a mode of displaying the whole moving picture and the partial moving picture in the same size on the screen, a mode of displaying any one of the whole moving picture and the partial moving picture, a mode of synthesizing and displaying two or more partial moving pictures in the whole moving picture, or the like.

The viewer can switch the display mode by operating operation means such as a button and a remote controller of the moving picture recording apparatus. Also, when there are a plurality of partial moving pictures associated with the whole moving picture being displayed, by operating the operation means, the partial moving picture to be displayed on the screen can be switched and the plurality of partial moving pictures can be displayed simultaneously.

Furthermore, in the display examples of Figs. 11 and 12, a mark (frame) 60 indicating the area of the partial moving picture is synthesized and displayed in the whole moving picture. This mark 60 is synthesized by the image synthesizing unit 17 based on the position information included in the partial moving picture stream. Such a mark allows the viewer to easily grasp which person is displayed in closeup.

According to the above-described moving picture recording apparatus of the present embodiment, since two types of moving pictures of whole and partial (closeup) moving pictures are automatically recorded merely by photographing the whole appearance in an angle of field, a zooming operation by a photographer or the like is unnecessary, which simplifies photographing and recording. In addition, since either of the images is generated from the original image with a high resolution, favorable image quality can be obtained.

Furthermore, in the present embodiment, since the face to be photographed in close-up is automatically detected from the original image, merely by containing the person to be a subj ect in the angle of field to photograph, the partial moving picture pursuing the face of the person in closeup is automatically recorded. In addition, since a partial moving picture of a non-registrant is not generated, there is an advantage that, even if there are contained a number of people within the angle of field, only the partial moving picture of a desired person (registrant) is recorded.

Furthermore, in the present embodiment, by trimming the area of the VGA size from the original image, the partial moving image is generated. Therefore, resolution conversion is unnecessary, so that the simplification and speeding-up of the partial image generation processing can be achieved and deterioration in image quality due to the resolution conversion can be prevented.

Furthermore, while, in the conventional moving picture apparatus, the influence of the motion of a subject and hand shaking makes it difficult to follow the motion of a face while obtaining a close-up of the face, in the moving picture recording apparatus of the present embodiment, the trimming of the partial image is performed so as to keep the position of the face in the partial image substantially constant, and thus a moving picture with little shaking can be obtained which is easy to view.

A second embodiment of the present invention is now described. While, in the first embodiment, a partial moving picture is recorded for each registrant by face recognition, in the present embodiment, partial moving pictures are recorded based on the size of the faces in a descending size order. Specifically, creating processing of the partial image list is different.

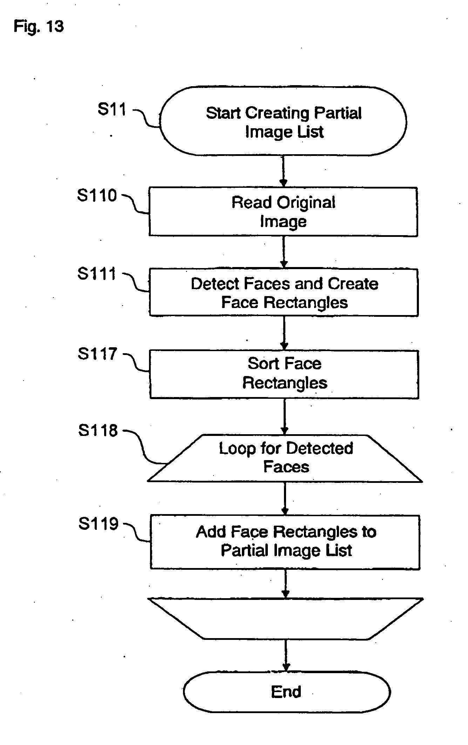

Fig. 13 shows the creating processing of the partial image list in accordance with the second embodiment. In Fig. 13, the same types of processing as those in Fig. 4 are indicated by the same step numbers.

As in the first embodiment, the face processing unit 13 first reads an original image from the frame memory 11 (step S110). Faces are detected from the original image and face rectangles are calculated (step S111).

After the face rectangles are obtained, the face processing unit 13 sorts the face rectangles in order of reducing the size (step S117). After sorting, the face rectangles other than the top two may be deleted or the face rectangles smaller than predetermined threshold values may be deleted to select only large face rectangles.

The face processing unit 13 adds the face rectangles after sorting to the partial image list in order (steps S118, S119). In the present embodiment, instead of the registration ID, the order after sorting (1, 2,...) is recorded. The processing thereafter is similar to that of the first embodiment.

According to the processing of the present embodiment, a face with a large size is automatically selected as a recording object of the partial moving picture. The photographer normally performs photographing so that a subject that he or she wants to photograph appears large, and thus, the probability that the recording object of the partial moving picture coincides with the subject is high. Namely, in the present embodiment, the partial moving picture of the desired subject can be automatically recorded without performing the registration of the face information and the face recognition processing.

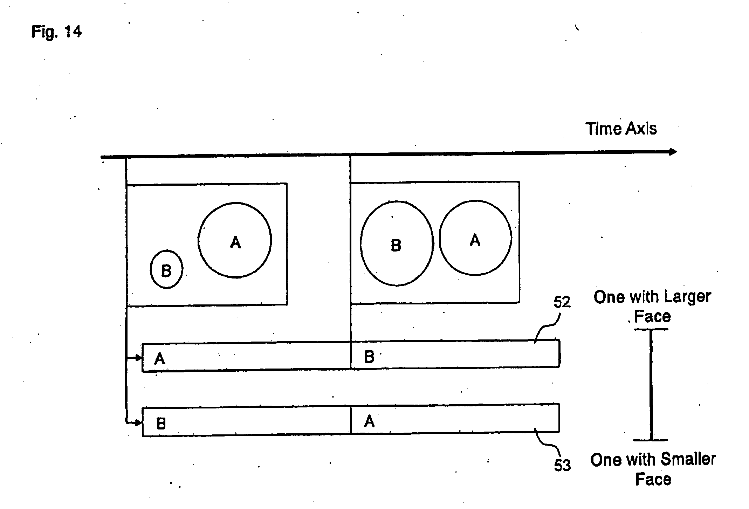

Furthermore, as shown in Fig. 14, when the sizes of a face A and a face B are replaced during photographing, in a first partial moving picture 52, the subject is replaced from the face A to the face B and in a second partial moving picture 53, the subject is replaced from the face B to the face A. By utilizing this, there is an advantage that a unique display effect of, for example, displaying a struggle for primacy in a race as a video picture with full presence or the like can be obtained.

A third embodiment of the present invention is now described. While, in the first embodiment, the partial image of the VGA size is trimmed from the original image, in the present embodiment, a partial image is generated so as to keep the size of a face in the partial image substantially constant.

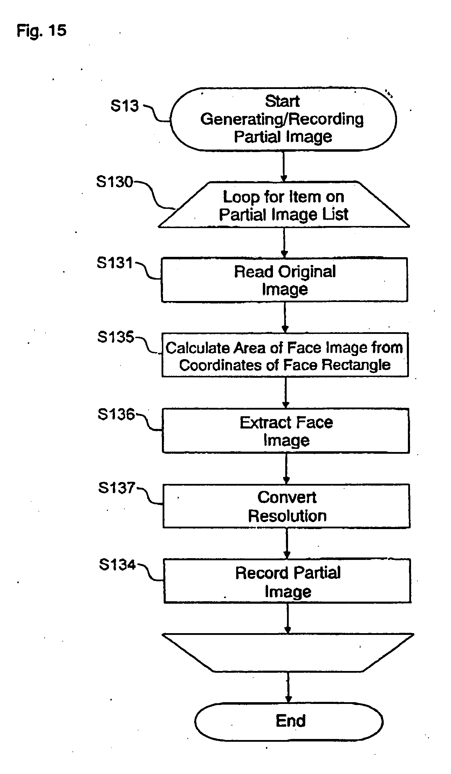

Fig. 15 shows generation/recording processing of a partial image in accordance with the third embodiment. In Fig. 15, the same types of processing as those in Fig. 5 are indicated by the same step numbers.

The image processing unit 12 first reads an original image from the frame memory 11 (step S131). Next, the image processing unit 12 acquires coordinates of a face rectangle from the partial image list to calculate coordinates of an area to be extracted as a face image (step S135). The face image indicates an image containing a face (face rectangle) and having a size substantially proportional to the face (face rectangle). In the present embodiment, the area of the face image is determined so as to be about 1.5 to 2 times as large as the face rectangle. An aspect ratio of the face image conforms to the pixels for moving picture recording (VGA size).

The image processing unit 12 extracts the face image from the original image (step S136) and then converts the resolution of the face image into an image of the VGA size to generate the partial image (step S137). The processing after this is similar to that of the first embodiment.

According to the present embodiment, the size of the face occupying the partial image is kept substantially constant. Namely, there is an advantage that the faces can be constantly photographed in the same size.

As described above, while the specific examples of the present invention are shown by the first to third embodiments, the scope of the present invention is not limited to the above-described embodiments, but various modifications can be made within the scope of its technical idea.

While, for example, the cases where the present invention is applied to a handheld video camera are shown in the above-described embodiments, the present invention can be preferably applied to other applications such as a monitoring camera. In the case of an installation type moving picture recording apparatus such as the monitoring camera, an area extracted as a partial image may be fixed.

Furthermore, by combining the processing of the first embodiment and the second embodiment, a partial moving picture may be recorded only in the case where a face has a large size and the face has been registered. Alternatively, the second embodiment and the third embodiment may be combined.

Furthermore, while, in the above-described embodiments, the information associating the whole moving picture and the partial moving picture with each other is recorded in the stream, it is preferable that the whole moving picture and the partial moving picture are associated with each other by utilizing a mechanism such as a multi-angle track of DVD.

Furthermore, in the above-described embodiments, while the comparison between the detected face and the face of the registrant is checked with respect to all frames, for example, the comparison may be performed only one time in 60 frames and in the rest frames, the movement of the face rectangles may be tracked. This can speed up processing.

Furthermore, the stream structures of the moving pictures and the structure of the partial image list described in the above embodiments are only examples and can be changed as necessary. The effective pixels of the imaging unit 10 and the pixels for moving picture recording can also be changed as necessary.

Furthermore, while the face portion is extracted as a partial image in the above-described embodiments, a whole body or an upper body may be extracted as a partial image, for example, by estimating a height of a person from the size of a face or a face rectangle.

## Claims

1. A moving picture recording apparatus comprising:
imaging means (10) for picking up original images at a higher resolution than the resolution of pixels for moving picture recording;
entire image generating means (12) for converting the resolution of each of said original images into entire images of the pixels for moving picture recording;
partial image generating means for generating partial images for moving picture recording from pixels of parts of said original images;
registering means (14) for registering a list of registration IDs and storing partial image information for each of the registration IDS;
recording means (15, 16, 17) arranged to:
compare each generated partial image with said stored partial image information;
associate the corresponding registration ID with the partial image when the partial image information corresponding to said registration ID coincides with the respective partial image, and
when the partial image information for each of the registration IDs does not correspond to the partial image,
generate a new registration ID and partial image information for said new registration ID, associate the new registration ID with said partial image, and add to the list said new registration ID and store said partial image information for the new registration ID, and
record an entire moving picture composed of a plurality of said original images and at least one partial moving picture, the or each partial moving picture being composed of a plurality of said partial images which all have the same registration ID associated therewith.

2. The moving picture recording apparatus (1) according to claim 1, wherein said partial image generating means has face detecting means for detecting one or more human faces from said original images and for generating said partial image so as to contain the detected face (5).

3. The moving picture recording apparatus (1) according to claim 2, wherein face information is registered is **characterised in that** said partial image generating said registering means (14) and there is face recognizing means for determining whether or not the detected face coincides with a face registered in said registering means (14), and in the case where the detected face is the registered face, generates a partial image containing the face.

4. The moving picture recording apparatus (1) according to claim 2 or claim 3 wherein said partial image generating means (12) is arranged to extract a region with a size of the pixels for moving picture recording from said original images and makes it one of the partial images.

5. The moving picture recording apparatus (1) according to claim 2 or claim 3, wherein said partial image generating means (12) is arranged to extract a region with a size substantially proportional to a size of the face from said original images, and then converts the resolution of the extracted image into the partial images of the pixels for moving picture recording.

6. The moving picture recording apparatus (1) according to claim 4 or claim 5, wherein said partial image generating means (12) is arranged to extract said region from said original images so as to keep a position of the face in the corresponding partial image substantially constant.

7. The moving picture recording apparatus (1) according to any one of the claims 1 to 6, wherein said recording means is arranged to record said plurality of original images and said at least one partial moving picture of said entire moving picture while making them temporally correspond to each other.

8. The moving picture recording apparatus (1) according to any one of claims 1 to 7, wherein said recording means is arranged to record a position of said partial image in said entire moving picture.

9. The moving picture recording apparatus (1) according to any one of claims 1 to 8, wherein said recording means (15, 16, 17) has a recording medium (30, 31) removable from a body of the moving picture apparatus (1).

10. The moving picture recording apparatus (1) according to any one of claims 1 to 9, comprising image synthesizing means for generating a video signal for displaying said plurality of original images and said at least one moving picture of said entire moving picture making them correspond to each other.

11. The moving picture recording apparatus (1) according to claim 10, comprising display means (18) for displaying said video signal.

12. The moving picture recording apparatus (1) according to claim 10 or claim 11, wherein said image synthesizing means is arranged to synthesize a mark indicating the region of the at least one partial moving picture in the entire moving picture.

13. The moving picture recording apparatus (1) according to any one of claims 10 to 12, comprising operation means for allowing a user to select the partial moving picture to be displayed on a screen when there are a plurality of partial moving pictures associated with the entire moving picture.

14. A moving picture recording method comprising:
picking up (51) original images at a higher resolution than the resolution of pixels for moving picture recording;
converting (5141)the resolution of each of said original images into entire images of the pixels for moving picture recording;
generating partial images (5133) for moving picture recording from pixels of parts of said original images
registering (5126) in a list registration IDs and storing partial image information for each of the registration IDs;
comparing (5114) each partial image with the registered and stored partial image information;
associating (5116) the corresponding registration ID with the partial image when the partial image information corresponding to said registration ID is identified in the respective partial image;
and when the partial image information for each of the registration IDs does not correspond to the partial image,
generating (5134) a new registration ID and partial image information for said new registration ID, associate the new registration ID with the partial image, and and to the list said new registration ID and storing said partial image information for the new registration ID, and
recording (514) an entire moving picture composed of a plurality of said original images and at least one partial moving picture, the or each partial moving picture being composed of a plurality of said partial images which all have the same registration ID associated therewith.

15. A program for moving picture recording which, when run on a computer, causes the computer to carry out the method of claim 14.

## Patentansprüche

1. Filmaufzeichnungsvorrichtung, die Folgendes umfasst:
Abbildungsmittel (10), um Originalbilder in einer höheren Auflösung als der Bildpunktauflösung zur Filmaufzeichnung aufzunehmen;
Vollbilderzeugungsmittel (12) zum Umwandeln der Auflösung jedes der Originalbilder in Vollbilder aus den Bildpunkten zur Filmaufzeichnung;
Teilbilderzeugungsmittel zur Filmaufzeichnung aus Bildpunkten von Teilen des Originalbilds;
Registrierungsmittel (14) zum Registrieren einer Liste von Registrierungs-IDs und zum Speichern von Teilbildinformationen für jede der Registrierungs-IDs;
Aufzeichnungsmittel (15, 16, 17), die angeordnet sind, um
jedes erzeugte Teilbild mit den gespeicherten Teilbildinformationen zu vergleichen,
die entsprechende Registrierungs-ID dem Teilbild zuzuordnen, wenn die Teilbildinformationen, die der Registrierungs-ID entsprechen, mit dem jeweiligen Teilbild übereinstimmen, und
wenn die Teilbildinformationen aller Registrierungs-IDs nicht mit dem Teilbild übereinstimmen, eine neue Registrierungs-ID und Teilbildinformationen für die neue Registrierungs-ID zu erstellen, die neue Registrierungs-ID dem Teilbild zuzuordnen, die neue Registrierungs-ID zu der Liste hinzuzufügen und die Teilbildinformationen für die neue Registrierungs-ID zu speichern,
und
einen aus einer Vielzahl der Originalbilder bestehenden Gesamtfilm und zumindest einen Teilfilm aufzuzeichnen, wobei der oder jeder Teilfilm aus einer Vielzahl der Teilbilder besteht, die alle dieselbe, ihnen zugeordnete Registrierungs-ID aufweisen.

2. Filmaufzeichnungsvorrichtung (1) nach Anspruch 1, worin ein Teilbilderzeugungsmittel ein Gesichtserkennungsmittel aufweist, um ein oder mehrere menschliche Gesichter auf den Originalbildern zu erkennen und die Teilbilder so zu erzeugen, dass diese das detektierte Gesicht (5) enthalten.

3. Filmaufzeichnungsvorrichtung (1) nach Anspruch 2, worin Gesichtsinformationen gespeichert und durch die in einem Registrierungsmittel (14) erzeugten Teilbildinformationen charakterisiert werden und worin Gesichtserkennungsmittel vorgesehen sind, um zu bestimmen, ob das detektierte Gesicht mit einem in dem Registrierungsmittel (14) gespeicherten Gesicht übereinstimmt oder nicht, und worin, wenn das detektierte Gesicht das registrierte Gesicht ist, ein Teilbild erzeugt wird, das das Gesicht enthält.

4. Filmaufzeichnungsvorrichtung (1) nach Anspruch 2 oder 3, worin das Teilbilderzeugungsmittel (12) angepasst ist, um einen Bereich mit einer bestimmten Größe von Bildpunkten zur Filmaufzeichnung aus den Originalbildern zu extrahieren und daraus eines der Teilbilder zu machen.

5. Filmaufzeichnungsvorrichtung (1) nach Anspruch 2 oder 3, worin das Teilbilderzeugungsmittel (12) angepasst ist, um einen Bereich aus dem Originalbild zu extrahieren, dessen Größe im Wesentlichen proportional zu der Größe des Gesichts ist, und anschließend die Auflösung des extrahierten Bilds in Teilbilder aus den Bildpunkten zur Filmaufzeichnung zu umzuwandeln.

6. Filmaufzeichnungsvorrichtung (1) nach Anspruch 4 oder 5, worin das Teilbilderzeugungsmittel (12) angepasst ist, um den Bereich aus dem Originalbild so zu extrahieren, dass die Position des Gesichts in dem entsprechenden Teilbild im Wesentlichen konstant gehalten wird.

7. Filmaufzeichnungsvorrichtung (1) nach einem der Ansprüche 1 bis 6, worin das Aufzeichnungsmittel angepasst ist, um die Vielzahl von Originalbildern und den zumindest einen Teilfilm des Gesamtfilms so aufzuzeichnen, dass diese einander zeitlich entsprechen.

8. Filmaufzeichnungsvorrichtung (1) nach einem de Ansprüche 1 bis 7, worin das Aufzeichnungsmittel angepasst ist, um die Position des Teilbilds in dem Gesamtfilm aufzuzeichnen.

9. Filmaufzeichnungsvorrichtung (1) nach einem de Ansprüche 1 bis 8, worin das Aufzeichnungsmittel (15, 16, 17) ein Aufzeichnungsmedium (30, 31) aufweist, das aus dem Körper der Filmaufzeichnungsvorrichtung (1) entnehmbar ist.

10. Filmaufzeichnungsvorrichtung (1) nach einem de Ansprüche 1 bis 9, die Bildsynthesemittel zur Erzeugung eines Videosignals umfasst, um die Vielzahl von Originalbildern und den zumindest einen Teilfilm des Gesamtfilms anzuzeigen und diese aneinander anzugleichen.

11. Filmaufzeichnungsvorrichtung (1) nach Anspruch 10, die ein Anzeigemittel (18) zum Anzeigen des Videosignals umfasst.

12. Filmaufzeichnungsvorrichtung (1) nach Anspruch 10 oder 11, worin das Bildsynthesemittel angepasst ist, um eine Markierung zu erstellen, die den Bereich des zumindest einen Teilfilms in dem Gesamtfilm anzeigt.

13. Filmaufzeichnungsvorrichtung (1) nach einem der Ansprüche 10 bis 12, die Betätigungsmittel umfasst, um einem Benutzer zu ermöglichen, den Teilfilm auszuwählen, der auf einem Bildschirm angezeigt werden soll, wenn eine Vielzahl von dem Gesamtfilm zugeordneten Teilfilmen vorliegt.

14. Filmaufzeichnungsverfahren, das Folgendes umfasst:
das Aufnehmen (51) von Originalbildern in einer höheren Auflösung als der Bildpunktauflösung zur Filmaufzeichnung;
das Umwandeln (5141) der Auflösung jedes Originalbilds in Vollbilder aus den Bildpunkten zur Filmaufzeichnung;
das Erzeugen von Teilbildern (5133) zur Filmaufzeichnung aus Bildpunkten von Teilen der Originalbilder;
das Registrieren (5116) von Registrierungs-IDs in einer Liste und das Speichern von Teilbildinformationen für jede der Registrierungs-IDs;
das Vergleichen (5114) jedes Teilbilds mit den registrierten und gespeicherten Teilbildinformationen;
das Zuordnen (5116) der entsprechenden Registrierungs-ID zu dem Teilbild, wenn die Teilbildinformationen, die der Registrierungs-ID entsprechen, in dem jeweiligen Teilbild identifiziert werden; und
wenn die Teilbildinformationen für jede Registrierungs-ID dem Teilbild nicht entsprechen, das Erstellen (5134) einer neuen Registrierungs-ID und neuer Teilbildinformationen für die neue Registrierungs-ID, das Zuordnen der neuen Registrierungs-ID zu dem Teilbild, das Hinzufügen der neuen Registrierungs-ID zu der Liste und das Speichern der Teilbildinformationen für die neue Registrierungs-ID; und
das Aufzeichnen (514) eines aus einer Vielzahl der Originalbilder bestehenden Gesamtfilms und zumindest eines Teilfilms, wobei der oder jeder Teilfilm aus einer Vielzahl der Teilbilder besteht, die alle dieselbe, ihnen zugeordnete Registrierungs-ID aufweisen.

15. Programm zur Filmaufzeichnung, das, wenn es auf einem Computer ausgeführt wird, veranlasst, dass der Computer ein Verfahren nach Anspruch 14 durchführt.

## Revendications

1. Dispositif d'enregistrement d'images animées, comprenant :
un moyen de création d'images (10) en vue de collecter des images d'origine à une résolution supérieure à la résolution de pixels d'enregistrement d'images animées ;
un moyen de génération d'images entières (12) pour convertir la résolution de chacune desdites images d'origine en des images entières des pixels d'enregistrement d'images animées ;
un moyen de génération d'images partielles pour générer des images partielles destinées à un enregistrement d'images animées à partir de pixels de parties desdites images d'origine ;
un moyen d'enregistrement (14) pour enregistrer une liste d'identifiants d'enregistrement et stocker des informations d'images partielles pour chacun des identifiants d'enregistrement ;
un moyen d'enregistrement (15, 16, 17) agencé de manière à :
comparer chaque image partielle générée auxdites informations d'images partielles stockées ;
associer l'identifiant d'enregistrement correspondant à l'image partielle lorsque les informations d'images partielles correspondant audit identifiant d'enregistrement coïncident avec l'image partielle respective ; et
lorsque les informations d'images partielles pour chacun des identifiants d'enregistrement ne correspondent pas à l'image partielle, générer un nouvel identifiant d'enregistrement et des informations d'images partielles pour ledit nouvel identifiant d'enregistrement, associer le nouvel identifiant d'enregistrement à ladite image partielle, et ajouter à la liste ledit nouvel identifiant d'enregistrement et stocker lesdites informations d'images partielles pour le nouvel identifiant d'enregistrement ; et
enregistrer une image animée entière composée d'une pluralité desdites images d'origine et d'au moins une image animée partielle, l'image ou chaque image animée partielle étant composée d'une pluralité desdites images partielles qui ont toutes le même identifiant d'enregistrement associé.

2. Dispositif d'enregistrement d'images animées (1) selon la revendication 1, dans lequel ledit moyen de génération d'images partielles présente un moyen de détection faciale pour détecter un ou plusieurs visages humains à partir desdites images d'origine et pour générer ladite image partielle afin qu'elle contienne le visage détecté (5).

3. Dispositif d'enregistrement d'images animées (1) selon la revendication 2, dans lequel des informations faciales sont enregistrées, et **caractérisé en ce que** ladite image partielle est générée par ledit moyen d'enregistrement (14), et **en ce qu'**il existe un moyen de reconnaissance faciale pour déterminer si le visage détecté coïncide ou non avec un visage enregistré dans ledit moyen d'enregistrement (14) et, dans le cas où le visage détecté est un visage enregistré, une image partielle contenant le visage est générée.

4. Dispositif d'enregistrement d'images animées (1) selon la revendication 2 ou 3, dans lequel ledit moyen de génération d'images partielles (12) est agencé de manière à extraire une zone avec une taille des pixels d'enregistrement d'images animées à partir desdites images d'origine, et ledit moyen intègre ladite zone à l'une des images partielles.

5. Dispositif d'enregistrement d'images animées (1) selon la revendication 2 ou 3, dans lequel ledit moyen de génération d'images partielles (12) est agencé de manière à extraire une zone avec une taille sensiblement proportionnelle à la taille du visage à partir desdites images d'origine, et à convertir ensuite la résolution de l'image extraite en celle des images partielles des pixels d'enregistrement d'images animées.

6. Dispositif d'enregistrement d'images animées (1) selon la revendication 4 ou 5, dans lequel ledit moyen de génération d'images partielles (12) est agencé de manière à extraire ladite zone à partir desdites images d'origine de manière à conserver sensiblement constante une position du visage dans l'image partielle correspondante.

7. Dispositif d'enregistrement d'images animées (1) selon l'une quelconque des revendications 1 à 6, dans lequel ledit moyen d'enregistrement est agencé de manière à enregistrer ladite pluralité d'images d'origine et ladite au moins une image animée partielle de ladite image animée entière tout en les rendant mutuellement et temporairement correspondantes.

8. Dispositif d'enregistrement d'images animées (1) selon l'une quelconque des revendications 1 à 7, dans lequel ledit moyen d'enregistrement est agencé de manière à enregistrer une position de ladite image partielle dans ladite image animée entière.

9. Dispositif d'enregistrement d'images animées (1) selon l'une quelconque des revendications 1 à 8, dans lequel ledit moyen d'enregistrement (15, 16, 17) présente un support d'enregistrement (30, 31) amovible à partir d'un corps du dispositif d'enregistrement d'images animées (1).

10. Dispositif d'enregistrement d'images animées (1) selon l'une quelconque des revendications 1 à 9, comprenant un moyen de synthèse d'images pour générer un signal vidéo en vue d'afficher ladite pluralité d'images d'origine et ladite au moins une image animée de ladite image animée entière en les faisant correspondre mutuellement.

11. Dispositif d'enregistrement d'images animées (1) selon la revendication 10, comprenant un moyen d'affichage (18) pour afficher ledit signal vidéo.

12. Dispositif d'enregistrement d'images animées (1) selon la revendication 10 ou 11, dans lequel ledit moyen de synthèse d'images est agencé de manière à synthétiser un repère indiquant la zone de ladite au moins une image animée partielle dans l'image animée entière.

13. Dispositif d'enregistrement d'images animées (1) selon l'une quelconque des revendications 10 à 12, comprenant une moyen d'exploitation pour permettre à un utilisateur de sélectionner l'image animée partielle destinée à être affichée sur un écran lorsqu'il existe une pluralité d'images animées partielles associées à l'image animée entière.

14. Procédé d'enregistrement d'images animées comprenant les étapes ci-dessous consistant à :
collecter (51) des images d'origine à une résolution supérieure à la résolution de pixels d'enregistrement d'images animées ;
convertir (5141) la résolution de chacune desdites images d'origine en des images entières des pixels d'enregistrement d'images animées ;
générer des images partielles (5133) d'enregistrement d'images animées à partir de pixels de parties desdites images d'origine ;
enregistrer (5116), dans une liste, des identifiants d'enregistrement et stocker des informations d'images partielles pour chacun des identifiants d'enregistrement ;
comparer (5114) chaque image partielle aux informations d'images partielles stockées et enregistrées ;
associer (5116) l'identifiant d'enregistrement correspondant à l'image partielle lorsque les informations d'images partielles correspondant audit identifiant d'enregistrement sont identifiées dans l'image partielle respective ; et
lorsque les informations d'images partielles pour chacun des identifiants d'enregistrement ne correspondent pas à l'image partielle,
générer (5134) un nouvel identifiant d'enregistrement et des informations d'images partielles pour ledit nouvel identifiant d'enregistrement, associer le nouvel identifiant d'enregistrement à ladite image partielle, et ajouter à la liste ledit nouvel identifiant d'enregistrement et stocker lesdites informations d'images partielles pour le nouvel identifiant d'enregistrement ; et
enregistrer (514) une image animée entière composée d'une pluralité desdites images d'origine et d'au moins une image animée partielle, l'image ou chaque image animée partielle étant composée d'une pluralité desdites images partielles lesquelles ont toutes le même identifiant d'enregistrement associé.

15. Programme d'enregistrement d'images animées lequel, lorsqu'il est exécuté sur un ordinateur, amène l'ordinateur à mettre en oeuvre le procédé selon la revendication 14.
